(19) Europäisches Patentamt
European Patent Office
Office européen des brevets

(11) **EP 4 769 565 A1**

(12) **EUROPEAN PATENT APPLICATION**
published in accordance with Art. 153(4) EPC

(43) Date of publication:
**01.07.2026 Bulletin 2026/27**

(21) Application number: **25774683.4**

(22) Date of filing: **21.03.2025**

(51) International Patent Classification (IPC):
$H01M\ 4/525$ (2010.01)   $H01M\ 4/36$ (2006.01)
$C01G\ 53/50$ (2025.01)   $H01M\ 4/131$ (2010.01)
$H01M\ 4/1391$ (2010.01)   $H01M\ 10/052$ (2010.01)
$H01M\ 4/02$ (2006.01)

(52) Cooperative Patent Classification (CPC):
**C01G 53/00; C01G 53/50; H01M 4/02; H01M 4/131;
H01M 4/1391; H01M 4/36; H01M 4/525;
H01M 10/052; Y02E 60/10**

(86) International application number:
**PCT/KR2025/003677**

(87) International publication number:
**WO 2025/198372 (25.09.2025 Gazette 2025/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2024 KR 20240039388**

(71) Applicant: **LG ENERGY SOLUTION, LTD.
Seoul 07335 (KR)**

(72) Inventors:
• **Heo, Jong Wook
Daejeon 34122 (KR)**
• **Kim, Ji Hye
Daejeon 34122 (KR)**
• **Jung, Hae Jung
Daejeon 34122 (KR)**
• **Yu, Jun Woo
Daejeon 34122 (KR)**
• **Yun, So Yeong
Daejeon 34122 (KR)**
• **Park, Byung Chun
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL, METHOD FOR PREPARING SAME, AND POSITIVE ELECTRODE AND LITHIUM SECONDARY BATTERY BOTH COMPRISING SAME**

(57)     A positive electrode active material according to the present invention is a positive electrode active material including a lithium nickel-based oxide in the form of a single particle which is composed of one single nodule, or a pseudo-single particle which is a composite of 30 or fewer nodules, wherein the lithium nickel-based oxide includes cobalt (Co) and aluminum (Al), and concentration ratios of cobalt (Co) and aluminum (Al) on the surface of the lithium nickel-based oxide which are measured by Energy Dispersive X-ray Spectroscopy (EDX) respectively satisfy Equations 1 and 2 below:

(Concentration ratio of Co in nodule to positive electrode active material)≤(Concentration ratio of Co at nodule interface to positive electrode active material)≤ (Concentration ratio of Co on surface of lithium nickel-based oxide particle to positive electrode active material)     [Equation 1]

(Concentration ratio of Al on surface of lithium nickel-based oxide particle to positive electrode active material)≤ (Concentration ratio of Al at nodule interface to positive electrode active material)<(Concentration ratio of Al in nodule to positive electrode active material)     [Equation 2]

**Description**

## TECHNICAL FIELD

### Cross-reference to Related Applications

This application claims the benefit of Korean Patent Application No. 10-2024-0039388, filed on March 21, 2024, in the Korean Intellectual Property Office, the disclosure of which is incorporated herein in its entirety by reference.

### Technical Field

The present invention relates to a positive electrode active material in a single particle form having excellent high-temperature lifespan properties, a method of manufacturing the same, a positive electrode including the positive electrode active material, and a lithium secondary battery.

## BACKGROUND ART

A lithium secondary battery is generally composed of a positive electrode, a negative electrode, a separator, and an electrolyte, and the positive electrode and the negative electrode include active materials capable of intercalation and deintercalation of lithium ions.

As a positive electrode active material of the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), and the like have been used. Among the above, the lithium cobalt oxide is advantageous in that the driving voltage is high and the capacity properties are excellent, but since the price of cobalt, which is a raw material, is high, and the supply thereof is unstable, so that it is difficult to commercially apply the lithium cobalt oxide to a large-capacity battery. The lithium nickel oxide has poor structural stability, so that it is difficult to implement sufficient lifespan properties. Meanwhile, the lithium manganese oxide has excellent stability, but has a problem in that the capacity properties thereof are poor. Therefore, in order to compensate for problems of lithium transition metal oxides including Ni, Co, or Mn alone, lithium composite transition metal oxides including two or more transition metals have been developed, and among them, a lithium nickel cobalt manganese oxide including Ni, Co, and Mn is widely used in the field of electric vehicle batteries.

A typical lithium nickel cobalt manganese oxide is generally in the form of a spherical secondary particle in which tens to hundreds of primary particles are aggregated. However, in the case of applying a lithium nickel cobalt manganese oxide in the form of a secondary particle in which a large number of primary particles are aggregated, particle breakage easily occurs wherein primary particles are broken off during a roll-pressing process when manufacturing a positive electrode, and there is a problem in that cracks are generated inside particles during a charging and discharging process. When particles of a positive electrode active material are broken or cracked, the contact area with an electrolyte solution increases, so that gas generation and active material deterioration caused by a side reaction with the electrolyte solution increase, resulting in a problem in that lifespan properties are degraded.

In order to solve the above-described problem, a technique for manufacturing a positive electrode active material in the form of a single particle rather than a secondary particle by increasing a firing temperature when manufacturing a lithium nickel cobalt manganese oxide has been proposed. A positive electrode active material in the form of a single particle has a smaller contact area with an electrolyte solution compared to a typical positive electrode active material in the form of a secondary particle, and thus, has fewer side reactions with the electrolyte solution, and has excellent particle strength, so that there is less particle breakage when manufacturing an electrode. Therefore, when a positive electrode active material in the form of a single particle is applied, there are advantages in terms of gas generation and lifespan properties. However, a typical positive electrode active material in the form of a single particle type requires a high firing temperature during synthesis, and accordingly, there is a problem in that the crystal structure of the surface of a particle changes from a layered structure to a rock-salt structure. The surface of the rock-salt structure, which is a non-conductor, has a problem in that the surface interferes with the movement of lithium ions during charging and discharging, thereby degrading the lifespan of the battery.

## DISCLOSURE OF THE INVENTION

### TECHNICAL PROBLEM

In order to solve the above-described problem, the present invention is to provide a positive electrode active material capable of suppressing deterioration of the positive electrode active material in a charge/discharge process by including a coating layer including cobalt and aluminum.

In addition, the present invention is to provide a positive electrode and a lithium secondary battery having improved high-temperature lifespan properties by including the positive electrode active material.

## TECHNICAL SOLUTION

[1] The present invention provides a positive electrode active material, the positive electrode active material including a lithium nickel-based oxide in the form of a single particle which is composed of one single nodule, or a pseudo-single particle which is a composite of 30 or fewer nodules, wherein the lithium nickel-based oxide includes cobalt (Co) and aluminum (Al), and concentration ratios of cobalt (Co) and aluminum (Al) on the surface of the lithium nickel-based oxide which are measured by Energy Dispersive X-ray Spectroscopy (EDX) respectively satisfy Equations 1 and 2 below.

(Concentration ratio of Co in nodule to positive electrode active material)≤(Concentration ratio of Co at nodule interface to positive electrode active material)≤ (Concentration ratio of Co on surface      [Equation 1]
of lithium nickel-based oxide particle to positive electrode active material)

(Concentration ratio of Al on surface of lithium nickel-based oxide particle to positive electrode active material)≤ (Concentration ratio of Al at nodule interface to positive electrode active material)<      [Equation 2]
(Concentration ratio of Al in nodule to positive electrode active material)

[2] In [1] above, the present invention provides a positive electrode active material, wherein in Equation 1 above, the concentration ratio of Co in the nodule with respect to the positive electrode active material is less than 5 mol%.
[3] In [1] or [2] above, the present invention provides a positive electrode active material, wherein in Equation 1 above, the concentration ratio of Al in the nodule with respect to the positive electrode active material is 0.2 mol% or greater.
[4] In at least one of [1] to [3] above, the present invention provides a positive electrode active material, wherein the positive electrode active material includes a coating layer formed on the surface of the lithium nickel-based oxide, wherein the coating layer includes at least one selected from the group consisting of Co, Al, Mg, Ti, V, Cr, Mn, Zr, Nb, W, and B.
[5] In at least one of [1] to [4] above, the present invention provides a positive electrode active material, wherein the molar ratio of Ni among all transition metals except lithium in the lithium nickel-based oxide is 55 mol% or greater.
[6] In at least one of [1] to [5] above, the present invention provides a positive electrode active material, wherein the lithium nickel-based oxide has a composition represented by Formula 1 below.

$$[Formula\ 1] \qquad Li_aNi_bCo_cM^1_dM^2_eO_2$$

In Formula 1 above, $M^1$ is at least one selected from the group consisting of Mn and Al, $M^2$ is at least one selected from the group consisting of Ti, Mg, Zr, Y, Ba, Ca, Zr, Sr, W, Ta, Nb, and Mo, and $1.0≤a≤1.5$, $0.55≤b<1.0$, $0<c≤0.20$, $0<d≤0.20$, and $0≤e≤0.10$.
[7] In at least one of [1] to [6] above, the present invention provides a positive electrode active material, wherein the positive electrode active material has an average particle diameter of the nodules of 1.0 μm to 10.0 μm.
[8] In at least one of [1] to [7] above, the present invention provides a positive electrode active material, wherein the positive electrode active material has a $D_{50}$ of 2.0 μm to 10.0 μm.
[9] In at least one of [1] to [8] above, the present invention provides a positive electrode active material, wherein the positive electrode active material has a BET specific surface area of 0.2 m²/g to 1.5 m²/g.
[10] The present invention provides a method of manufacturing a positive electrode active material, wherein the method includes mixing a lithium nickel-based hydroxide precursor, a lithium raw material, and an aluminum-containing raw material, and then firing the mixture to form a lithium nickel-based oxide, and mixing two types of cobalt compounds having different sizes and an aluminum compound with the lithium nickel-based oxide, and then heat-treating the mixture to form a coating layer.
[11] In [10] above, the present invention provides a method of manufacturing a positive electrode active material, wherein the firing is performed at a temperature of 600 °C to 1,000 °C for 4 hours to 12 hours.
[12] In [10] or [11] above, the present invention provides a method of manufacturing a positive electrode active material, wherein the cobalt compound is prepared by mixing two types of materials respectively having a $D_{50}$ of 50 nm to 800 nm and a $D_{50}$ of 200 nm to 2,000 nm in a ratio of 1:3 to 3:1.
[13] In at least one of [10] to [12] above, the present invention provides a method of manufacturing a positive electrode active material, wherein the heat treatment is performed at a temperature of 600 °C to 800 °C for 4 hours to 12 hours.

[14] In at least one of [10] to [13] above, the present invention provides a method of manufacturing a positive electrode active material, wherein the mixing of the cobalt compounds and the aluminum compound is performed by a dry mixing method.

[15] The present invention provides a positive electrode including the positive electrode active material according to any one of [1] to [9] above.

[16] The present invention provides a lithium secondary battery including the positive electrode according to [15] above.

## ADVANTAGEOUS EFFECTS

In order to solve a problem of degradation in high-temperature lifespan properties that may occur as the concentration ratio of Co in a nodule with respect to a positive electrode active material decreases with the progress of charge and discharge, resulting in intensified Li/Ni disordering, a positive electrode active material according to the present invention allows concentration ratios of cobalt (Co) and aluminum (Al) on the surface of a lithium nickel-based oxide measured by EDX to respectively satisfy Equations 1 and 2, thereby increasing the overall material durability due to strong binding energy with oxygen and suppress deterioration of the positive electrode active material during the charge and discharge process of a battery, which may implement excellent high-temperature lifespan properties.

## BEST MDOE FOR CARRYING OUT THE INVENTION

The terms and words used in the present specification and its claims should not be construed in its ordinary or dictionary sense, but should be interpreted in a sense and concept consistent with the technical ideas of the present invention, based on the principle that an inventor may adequately define the concept of the terms in order to best describe his/her invention.

In the present invention, a "single particle" is a particle composed of one single nodule. In the present invention, a "pseudo-single particle" refers to a composite particle formed of 30 or fewer nodules.

In the present invention, a "nodule" refers to a sub-particle unit body constituting a single particle and a pseudo-single particle, wherein the nodule may be a single crystal with no crystalline grain boundary, or may be a polycrystal with no grain boundary in appearance when observed in a range of vision of 5,000 to 20,000 times using a scanning electron microscope (SEM). The average particle diameter of the nodules may be measured as an arithmetic average value of particle diameters of each nodule measured using a scanning electron microscope (SEM).

In the present invention, a "secondary particle" refers to a particle formed by aggregation of tens to hundreds, particularly, more than 30 sub-particle unit bodies. The sub-particle unit body constituting the secondary particle is referred to as a "primary particle" in order to distinguish the same from the nodule, which is the sub-particle unit body constituting the single particle and the pseudo-single particle.

The term "particle" used in the present invention may include any one or all of a single particle, a pseudo-single particle, a primary particle, a nodule, and a secondary particle.

In the present invention, "$D_{50}$" refers to a particle size based on 50% of a volume cumulative particle size distribution of positive electrode active material. The $D_{50}$ may be measured by a laser diffraction method. For example, the average particle diameter ($D_{50}$) may be measured by dispersing positive electrode active material powder in a dispersion medium, and then introducing the mixture into a commercially available laser diffraction particle size measurement device (e.g., Microtrac MT 3000) to be irradiated with an ultrasonic wave of about 28 kHz at an output of 60W, thereby obtaining a volume cumulative particle size distribution graph, and then obtaining a particle size corresponding to 50% of a volume cumulative amount.

In the present invention, a "specific surface area" is measured by a BET method, and specifically, may be calculated from the adsorption amount of nitrogen gas under a liquid nitrogen temperature (77K) using Belsorp-mino II of BEL Japan Co., Ltd.

In the present invention, "Energy Dispersive X-ray Spectroscopy (EDX)" is used to confirm the concentration of a specific atom within a nodule, at a nodule interface, and on the surface of a lithium nickel-based oxide. During EDX measurement, there are cases in which performing the measurement while scanning within each area and evaluating the area in two dimensions is referred to as surface analysis of EDX, and there are other cases in which extracting data of a linear area from the surface analysis of EDX and evaluating the distribution of atomic concentration within a positive electrode active material particle is referred to as line analysis.

Hereinafter, the present invention will be described in detail.

A positive electrode active material, a method for preparing the positive electrode active material, a positive electrode, and/or a lithium secondary battery according to the present invention include at least one of configurations disclosed below, and may include any combination of technically possible configurations of the following configurations.

## Positive electrode active material

Hereinafter, a positive electrode active material according to the present invention will be described.

The positive electrode active material according to the present invention is a positive electrode active material including a lithium nickel-based oxide in the form of a single particle which is composed of one single nodule, or a pseudo-single particle which is a composite of 30 or fewer nodules, wherein the lithium nickel-based oxide includes cobalt (Co) and aluminum (Al).

The lithium nickel-based oxide particle is in the form of a single particle which is composed of one single nodule or a pseudo-single particle which is a composite of 30 or fewer, preferably 2 to 20 nodules, and more preferably 2 to 10 nodules. The lithium nickel-based oxide in the form of a single particle and/or a pseudo-single particle has higher particle strength than a typical lithium nickel-based oxide in the form of a secondary particle in which tens to hundreds of primary particles are aggregated, so that there is less particle breakage during roll-pressing.

In addition, the lithium nickel-based oxide in the form of a single particle or a pseudo-single particle according to the present invention has a small number of sub-particle unit bodies (i.e., nodules) constituting a particle, so that there is less change caused by volume expansion and contraction of primary particles during charging and discharging, and accordingly, the occurrence of cracks inside the particle is significantly reduced.

Meanwhile, in general, the deterioration of a positive electrode active material occurs due to a deterioration phenomenon at the interface between an electrolyte and the positive electrode active material, and if the concentration ratio of Co in a nodule with respect to the positive electrode active material decreases, there is a problem in that Li/Ni disordering in the nodule intensifies with the progress of charge and discharge, and the stability of a layered structure is deteriorated.

Therefore, the present inventors have confirmed that high-temperature lifespan properties are improved if concentration ratios of cobalt (Co) and aluminum (Al) on the surface of the lithium nickel-based oxide which are measured by Energy Dispersive X-ray Spectroscopy (EDX) respectively satisfy Equations 1 and 2 below.

(Concentration ratio of Co in nodule to positive electrode active material)≤(Concentration ratio of Co at nodule interface to positive electrode active material)≤ (Concentration ratio of Co on surface of lithium nickel-based oxide particle to positive electrode active material)     [Equation 1]

(Concentration ratio of Al on surface of lithium nickel-based oxide particle to positive electrode active material)≤ (Concentration ratio of Al at nodule interface to positive electrode active material)<(Concentration ratio of Al in nodule to positive electrode active material)     [Equation 2]

In Equation 1 above, the concentration ratio of Co in a nodule with respect to a positive electrode active material may be less than 5 mol%, less than 3 mol%, or less than 1 mol%. In addition, the concentration ratio of Co at a nodule interface with respect to a positive electrode active material may be 5 mol% to 40 mol%, 10 mol% to 30 mol%, or 15 mol% to 25 mol%. In addition, the concentration ratio of Co on the surface of a lithium nickel-based oxide particle with respect to a positive electrode active material may be 10 mol% to 60 mol%, 20 mol% to 50 mol%, or 30 mol% to 40 mol%.

In Equation 2, the concentration ratio of Al in a nodule with respect to a positive electrode active material may be 0.2 mol% or greater, 0.3 mol% to 5.0 mol%, or 1.0 mol% to 3.0 mol%. In addition, the concentration ratio of Al at a nodule interface with respect to a positive electrode active material may be 0.1 mol% to 2.0 mol%, 0.3 mol% to 1.5 mol%, or 0.5 mol% to 1.0 mol%. In addition, the concentration ratio of Al on the surface of a lithium nickel-based oxide particle with respect to a positive electrode active material may be 0.1 mol% to 2.0 mol%, 0.3 mol% to 1.5 mol%, or 0.5 mol% to 1.0 mol%.

Meanwhile, the positive electrode active material according to the present invention includes a coating layer formed on the surface of the lithium nickel-based oxide.

An Ni-based positive electrode active material has high capacity since the content of nickel therein among transition metals constituting the positive electrode active material is higher than that of other transition metals, but has the limitation of structural instability due to unstable $Ni^{3+}$ and $Ni^{4+}$ ions present on the surface of the positive electrode active material. In order to resolve the structural instability described above, various techniques for modifying the surface of a positive electrode active material are being studied.

The coating layer may include at least one selected from the group consisting of Co, Al, Mg, Ti, V, Cr, Mn, Zr, Nb, W, and B, and preferably, may include Co and/or Al. In this case, the coating layer may include cobalt (Co) in an amount of 4,000 ppm to 25,000 ppm, preferably 8,000 ppm to 20,000 ppm, and more preferably 10,000 ppm to 15,000 ppm based on the total weight of the positive active material. In addition, the coating layer may include aluminum (Al) in an amount of 500 ppm to 12,000 ppm, preferably 1,000 ppm to 6,000 ppm, and more preferably 1,200 ppm to 3,000 ppm based on the total weight of the positive active material.

Meanwhile, the positive electrode active material according to the present invention may have a composition in which the content of nickel among all metals excluding lithium is 55 mol% or greater, preferably 80 mol% or greater, and more preferably 90 mol% or greater. Specifically, the positive electrode active material according to the present invention may include a lithium nickel-based oxide having a composition as shown in Formula 1 below.

$$[Formula\ 1] \qquad Li_aNi_bCo_cM^1{}_dM^2{}_eO_2$$

In Formula 1 above, $M^1$ is Mn, Al, or a combination thereof, preferably Mn or a combination of Mn and Al, and $M^2$ is one or more selected from the group consisting of Ba, Ca, Zr, Ti, Mg, Ta, Nb, and Mo. An $M^2$ element is not necessarily included, but if included in an appropriate amount, the $M^2$ element may serve to promote particle growth during firing or improve crystal structure stability.

The a represents the molar ratio of lithium in the lithium nickel-based oxide, and may satisfy $1.0 \leq a \leq 1.5$, $1.0 \leq a \leq 1.2$, or $1.00 \leq a \leq 1.15$. If the molar ratio of lithium satisfies the above-described range, a stable layered crystal structure may be formed.

The b represents the molar ratio of nickel among all metals excluding lithium in the lithium nickel-based oxide, and may satisfy $0.55 \leq b < 1.0$, $0.80 \leq b < 1.0$, $0.85 \leq b < 1.0$, or $0.90 \leq b < 1$. If the molar ratio of nickel satisfies the above-described range, excellent capacity properties may be exhibited, and particularly, if the molar ratio of nickel is 0.90 or greater, more excellent capacity properties may be implemented.

The c represents the molar ratio of cobalt among all metals excluding lithium in the lithium nickel-based oxide, and may satisfy $0 < c \leq 0.20$, $0 < c < 0.20$, or $0 < c < 0.18$.

The d represents the molar ratio of $M^1$ among all metals excluding lithium in the lithium nickel-based oxide, and may satisfy $0 < d \leq 0.20$, $0 < d < 0.20$, or $0 < d < 0.18$.

The e represents the molar ratio of an $M^2$ element among all metals excluding lithium in the lithium nickel-based oxide, and may satisfy $0 \leq e \leq 0.20$, $0 \leq e \leq 0.15$, or $0 \leq e \leq 0.10$.

In the positive electrode active material according to the present invention, the average particle diameter of the nodules may be 1.0 $\mu$m to 10.0 $\mu$m, 2.0 $\mu$m to 6.0 $\mu$m, or 3.0 $\mu$m to 5.0 $\mu$m. If the average particle diameter of the nodules of the positive electrode active material according to the present invention satisfies the above-described range, properties of high energy density and low initial resistance may be implemented. If the average particle diameter of the nodules of the positive electrode active material according to the present invention is less than 1.0 $\mu$m, the total specific surface area of the positive electrode active material increases, which may increase side reactions with an electrolyte solution, and if the average particle diameter of the nodules is greater than 10.0 $\mu$m, lithium mobility decreases, which may degrade output properties of a battery.

The positive electrode active material according to the present invention may have a $D_{50}$ of 2.0 $\mu$m to 10.0 $\mu$m, 3.0 $\mu$m to 7.0 $\mu$m, or 3.5 $\mu$m to 5.0 $\mu$m. If the $D_{50}$ of the positive electrode active material according to the present invention satisfies the above-described range, properties of high energy density and low initial resistance may be implemented. If the $D_{50}$ of the positive electrode active material is less than 2.0 $\mu$m, it is difficult to implement a high roll-pressing density, which may decrease an energy density, and if the $D_{50}$ is greater than 10.0 $\mu$m, the lithium mobility in the positive electrode active material decreases, which may increase the initial resistance of a lithium secondary battery including the positive electrode active material.

The positive electrode active material according to the present invention may have a BET specific surface area of 0.2 $m^2$/g to 1.5 $m^2$/g, preferably 0.3 $m^2$/g to 1.2 $m^2$/g or 0.4 $m^2$/g to 1.0 $m^2$/g, and more preferably 0.4 $m^2$/g to 0.8 $m^2$/g. If the BET specific surface area of the positive electrode active material is less than 0.2 $m^2$/g, there is a concern regarding initial output degradation, and if the BET specific surface area is greater than 1.5 $m^2$/g, there are concerns regarding high-temperature lifespan, resistance increase rate, and storage gas. Therefore, if the BET specific surface area of the positive electrode active material satisfies the above-described numerical range, excellent performance in output performance and high-temperature durability may be implemented.

## Method for manufacturing positive electrode active material

Next, a method for manufacturing a positive electrode active material of the present invention will be described.

A method for manufacturing a positive electrode active material according to the present invention includes mixing a lithium nickel-based hydroxide precursor, a lithium raw material, and an aluminum-containing raw material, and then firing the mixture to form a lithium nickel-based oxide, and mixing two types of cobalt compounds having different sizes and an aluminum compound with the lithium nickel-based oxide, and then heat-treating the mixture to form a coating layer.

In addition, the lithium nickel-based oxide has a molar ratio of Ni of 55 mol% or greater among all transition metals, and is a single particle composed of one single nodule or a pseudo-single particle which is a composite of 30 or fewer nodules. Since the above description is equally applied, a redundant description will be omitted.

Hereinafter, each step of the method for preparing a positive electrode active material will be described in detail.

First, a lithium nickel-based hydroxide precursor including nickel, cobalt, and manganese, a lithium raw material, and an aluminum-containing raw material are mixed and then fired to form a lithium nickel-based oxide.

In this case, the positive electrode active material precursor may be a commercially available precursor purchased and used, such as a nickel-cobalt-manganese-based hydroxide or the like, or may be prepared according to a precursor preparation method known in the art, such as coprecipitation.

For example, a transition metal-containing solution including cations of nickel (Ni), cobalt (Co), and $M^1$ is prepared, and then the transition metal-containing solution is added with an ammonium cation-containing complex forming agent and a basic aqueous solution to be subjected to a coprecipitation reaction to prepare a positive electrode active material precursor.

The transition metal-containing solution may include a nickel-containing raw material, a cobalt-containing raw material, and an $M^1$-containing raw material, and the $M^1$-containing raw material may be a manganese-containing raw material and/or an aluminum-containing raw material.

The nickel-containing raw material may be, for example, an acetate, a nitrate, a sulfate, a halide, a sulfide, a hydroxide, an oxide, an oxyhydroxide, or the like, which contains nickel, and may be, specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, a nickel halide, or a combination thereof, but is not limited thereto.

The cobalt-containing raw material may be an acetate, a nitrate, a sulfate, a halide, a sulfide, a hydroxide, an oxide, or an oxyhydroxide, and the like, all containing cobalt, specifically $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but is not limited thereto.

The manganese-containing raw material may be, for example, an acetate, a nitrate, a sulfate, a halide, a sulfide, a hydroxide, an oxide, an oxyhydroxide, or a combination thereof, which contains manganese, and may be, specifically, a manganese oxide such as $Mn_2O_3$, $MnO_2$, and $Mn_3O_4$, a manganese salt such as $MnCO_3$, $Mn(NO_3)_2$, $MnSO_4$, manganese acetate, dicarboxylic acid manganese, citric acid manganese, and fatty acid manganese salt, manganese oxyhydroxide, manganese chloride, or a combination thereof, but is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof.

The transition metal-containing solution may be prepared by adding the nickel-containing raw material, the cobalt-containing raw material, and the $M^1$-containing raw material to a solvent, specifically water, or a mixed solvent of water and an organic solvent which can be uniformly mixed with water (for example, alcohol, etc.). Alternatively, the transition metal-containing solution may be prepared by mixing an aqueous solution of the nickel-containing raw material, an aqueous solution of the cobalt-containing raw material, and the $M^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $NH_4CO_3$, or a combination thereof, but is not limited thereto. Meanwhile, the ammonium cation-containing complex forming agent may be used in the form of an aqueous solution, and at this time, water, or a mixture of an organic solvent (for example, an alcohol, etc.) which can be uniformly mixed with water and water may be used as a solvent.

The basic compound may be a hydroxide of an alkali metal or an alkaline earth metal, such as NaOH, KOH or $Ca(OH)_2$, a hydrate thereof, or a combination thereof. The basic compound may also be used in the form of an aqueous solution, and at this time, as a solvent, water, or a mixture of an organic solvent (for example, alcohol, etc.) which can be uniformly mixed with water and water may be used.

The basic compound is added to control the pH of a reaction solution, and may be added in an amount such that the pH of a metal solution is 8 to 12.

The coprecipitation reaction may be performed in an inert atmosphere, for example, in a nitrogen atmosphere, an argon atmosphere, or the like, at a temperature in the range of 35 °C to 80 °C.

By the above-described process, positive electrode active material precursor particles of a nickel-cobalt-$M^1$ hydroxide are produced, and precipitated in the reaction solution. By controlling the concentration of the nickel-containing raw material, the cobalt-containing raw material, and the $M^1$-containing raw material, a positive electrode active material precursor having a nickel (Ni) content of 55 mol% or greater in the total content of metals may be prepared. The precipitated positive electrode active material precursor particles are separated according to a typical method, and dried to prepare a positive electrode active material precursor.

Thereafter, the positive electrode active material precursor and a lithium raw material may be mixed.

The lithium raw material may be a sulfate, a nitrate, an acetate, a carbonate, an oxalate, a citrate, a halide, a hydroxide, an oxyhydroxide, or the like, which contains lithium, and is not particularly limited as long as it may be dissolved in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or the like, and any one thereof or a mixture of two or more thereof may be used.

The positive electrode active material precursor and the lithium raw material may be mixed at a molar ratio of, for example, about 1: 1, about 1: 1.05, about 1: 1.10, about 1: 1.15, or about 1: 1.20, but are not limited thereto.

The aluminum-containing raw material may be mixed in an amount of 0.05 mol% to 4.0 mol%, preferably 0.1 mol% to 1.5 mol%, and more preferably 0.2 mol% to 1.0 mol% based on the number of moles of the positive electrode active material precursor.

Thereafter, the mixture may be fired. The firing may be performed under an air or oxygen atmosphere. An appropriate firing temperature may vary depending on the metal composition within a precursor, and for example, if the content of nickel (Ni) is 80 mol% or greater, the firing temperature may be of 600 °C to 1000 °C, 750 °C to 950 °C, or 800 °C to 950 °C. The firing may be performed for 4 hours to 12 hours, 6 hours to 12 hours, or 8 hours to 12 hours.

If the firing temperature and the firing duration satisfy the above-described ranges, the structural instability of the positive electrode active material due to a decrease in Co content within a nodule, which may occur with the progress of charge and discharge, may be compensated by the presence of Al in the nodule, and accordingly, high-temperature lifespan properties may be improved.

Next, the lithium nickel-based oxide is mixed with two types of cobalt compounds having different sizes and an aluminum compound, and then the mixture is heat-treated to form a coating layer.

The surface of the lithium nickel-based oxide particle is coated with the cobalt compound and the aluminum compound.

The cobalt compound may be a mixture of two materials respectively having a $D_{50}$ of 50 nm to 800 nm, preferably 100 nm to 500 nm, and more preferably 150 nm to 350 nm, and a $D_{50}$ of 200 nm to 2,000 nm, preferably 400 nm to 1,200 nm, and more preferably 600 nm to 900 nm. The above-described two materials may be mixed in a ratio of 1 : 3 to 3 : 1. By using two types of cobalt compounds having different sizes, it is possible to selectively control the concentration ratio of Co at a nodule interface with respect to the positive electrode active material and the concentration ratio thereof on the surface of a lithium nickel-based oxide particle with respect to the positive electrode active material compared to a case in which a single cobalt compound is used, so that stability on the surface may be maximized for the same Co content, thereby achieving an effect of improving high-temperature lifespan performance.

The total number of moles of the cobalt compound may be 0.5 mol% to 4.0 mol%, preferably 1.3 mol% to 3.3 mol%, and more preferably 1.6 mol% to 2.5 mol% based on the number of moles of the lithium nickel-based oxide. If the cobalt compound is mixed in a content of the above-described numerical range, there is an effect of improving high-temperature lifespan performance though a mechanism in which Co coating reduces a Ni deterioration phenomenon at the interface between an electrolyte and the positive electrode active material.

The cobalt compound may be an acetate, a nitrate, a sulfate, a halide, a sulfide, a hydroxide, an oxide, or an oxyhydroxide, and the like, all containing cobalt, specifically $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but is not limited thereto.

The aluminum compound may be mixed in an amount of 0.03 mol% to 2.5 mol%, preferably 0.05 mol% to 1.0 mol%, and more preferably 0.1 mol% to 0.5 mol% based on the number of moles of the lithium nickel-based oxide. If the aluminum compound is mixed in a content of the above-described numerical range, there is an effect of improving high-temperature lifespan performance though a mechanism in which Al coating reduces a Ni deterioration phenomenon at the interface between an electrolyte and the positive electrode active material.

The aluminum compound may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, an aluminum halide, or a combination thereof.

The heat treatment may be performed at a temperature of 600 °C to 800 °C, 650 °C to 750 °C, or 670 °C to 730 °C. The heat treatment may be performed for 4 hours to 12 hours, 6 hours to 12 hours, or 8 hours to 12 hours.

As a result of mixing the lithium nickel-based oxide with the cobalt and aluminum compounds and then heat-treating the mixture in the above-described heat treatment temperature and heat treatment duration ranges, Co and Al coating layers may be effectively formed at a nodule interface with respect to the positive electrode active material, and on the surface of a lithium nickel-based oxide particle with respect to the positive electrode active material, so that a Ni deterioration phenomenon which mainly occurs at the interface with an electrolyte solution may be effectively reduced, thereby improving the high-temperature lifespan properties.

The mixing of the cobalt-containing raw material and the aluminum-containing raw material may be performed by a dry mixing method.

**Positive electrode**

A positive electrode according to the present invention includes the above-described positive electrode active material of the present invention. Specifically, the positive electrode includes a positive electrode current collector, and a positive electrode active material layer formed on the positive electrode current collector, wherein the positive electrode active material layer includes the positive electrode active material according to the present invention. Since the positive electrode active material has been described above, a detailed description thereof will be omitted, and hereinafter, only the rest of the components will be described in detail.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, heat treatment carbon, or aluminum or stainless steel that is surface-treated with one of carbon, nickel, titanium, silver, and the like may be used. Also, the positive electrode current collector may typically have a thickness of 3 μm to 500 μm, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material.

In this case, the positive electrode active material may be included in a content of 80 wt% to 99 wt%, more specifically 90 wt% to 98 wt% with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, and more preferably 0.1 wt% to 5 wt% based on the total weight of a positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of a positive electrode active material layer.

The positive electrode may be manufactured according to a typical method for manufacturing a positive electrode except that the positive electrode active material described above is used. Specifically, the positive electrode may be manufactured by applying a positive electrode slurry composition, which is prepared by dissolving or dispersing the positive electrode active material described above and selectively, if necessary, a binder, a conductive material, and a dispersant in a solvent, on a positive electrode current collector, followed by drying and roll-pressing.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In addition, in another method, the positive electrode may also be manufactured by casting the positive electrode slurry composition on a separate support, and then laminating a film obtained by being peeled off from the support on a positive electrode current collector.

**Lithium secondary battery**

Next, a lithium secondary battery according to the present invention will be described.

Specifically, the lithium secondary battery includes a positive electrode, a negative electrode positioned to face the positive electrode, a separator interposed between the positive electrode and the negative electrode, and an electrolyte, and since the positive electrode is the same as that described above, a detailed description thereof will be omitted, and hereinafter, only the rest of the components will be described in detail.

Also, the lithium secondary battery may selectively further include a battery case for accommodating an electrode assembly of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the current collector to improve the binding force of a negative electrode active material. For example, the negative electrode current collector may be used in various forms such as a film, a sheet, a foil, a net, a porous body, a foam, and a non-woven body.

The negative electrode active material layer selectively includes a binder and a conductive material, together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO\beta(0 < \beta < 2)$, $SnO_2$, a vanadium oxide, and a lithium vanadium oxide; or a composite including the metallic material and the carbonaceous material such as an Si-C composite or an Sn-C composite, and any one thereof or a mixture of two or more thereof may be used. In addition, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% based on the total weight of the negative electrode active material layer.

The binder is a component for assisting in binding between a conductive material, an active material, and a current collector, and is typically added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of a negative electrode active material, and may be included in an amount of 1 wt% to 30 wt%, 1 wt% to 20 wt%, or 1 wt% to 10 wt% based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a negative electrode slurry composition, which is prepared by dissolving or dispersing a negative electrode active material and selectively, a binder and a conductive material in a solvent, on a negative electrode current collector, followed by drying, or may be prepared by casting the negative electrode slurry composition on a separate support, and then laminating a film peeled off from the support on a negative electrode current collector.

Meanwhile, in the lithium secondary battery, the separator is to separate the negative electrode and the positive electrode and to provide a movement path for lithium ions, and any separator may be used without particular limitation as long as it is a separator commonly used in a lithium secondary battery, and particularly, a separator having low resistance to ion movement in an electrolyte and excellent moisture retention ability for an electrolyte solution is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a lithium secondary battery, but the electrolyte is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 10.0 wt% based on the total weight of the electrolyte.

As described above, a lithium secondary battery including the positive electrode active material according to the present invention stably exhibits excellent discharge capacity, output properties, and capacity retention rate, and thus, is useful in the field of portable devices such as mobile phones, laptop computers, digital cameras, etc., and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source for one or more medium-to-large devices of a power tool, an electric car including an electric vehicle (EV), a hybrid electric vehicle, and a plug-in hybrid electric vehicle (PHEV), or a system for power storage.

Hereinafter, embodiments of the present invention will be described in detail so that those skilled in the art may easily carry out the present invention. However, the present invention may be embodied in many different forms, and is not limited to the embodiments set forth herein.

## Examples and Comparative Examples

### Example 1

A transition metal precursor having a molar ratio of Ni : Co : Mn of 96 : 1 : 3, a lithium raw material (LiOH), and $Al(OH)_3$ were mixed such that the molar ratio of the transition metal (Ni+Co+Mn) : Li : Al was to be 1 : 1.02 : 0.3, and then the mixture was fired at 870 °C for 12 hours to prepare $Li[Ni_{0.96}Co_{0.01}Mn_{0.03}]_{0.977}Al_{0.023}O_2$ in the form of a single particle.

Thereafter, the fired product was dry-mixed with a total of 2 mol% of $Co(OH)_2$ having a $D_{50}$ of 200 nm and $Co(OH)_2$ having a $D_{50}$ of 800 nm in a ratio of 1 : 1 with respect to a final positive electrode active material, and 0.2 mol% of $Al(OH)_3$, and then the mixture was heat-treated at 680 °C for 10 hours to prepare positive electrode active material powder in the form of a single particle having a cobalt (Co)-containing coating layer and an aluminum (Al)-containing coating layer formed on the surface thereof.

**Comparative Example 1**

Positive electrode active material powder was prepared in the same manner as in Example 1, except that Al(OH)$_3$ was not additionally mixed during the firing, and the fired product was mixed only with 2 mol% of Co(OH)$_2$ having a D$_{50}$ of 800 nm and then heat-treated.

**Comparative Example 2**

Positive electrode active material powder was prepared in the same manner as in Example 1, except that Al(OH)$_3$ was not additionally mixed during the firing, and Al(OH)$_3$ was not additionally mixed during the dry-mixing.

**Comparative Example 3**

Positive electrode active material powder was prepared in the same manner as in Example 1, except that Al(OH)$_3$ was not additionally mixed during the firing.

**Experimental Example 1: Evaluation of properties of positive electrode active material**

The results of Energy Dispersive X-ray Spectroscopy (EDX) with respect to (1) within nodule, (2) nodule interface, and (3) surface of lithium nickel-based oxide particle of the positive electrode active materials of Example 1 and Comparative Examples 1 to 3 are shown in Table 1 below.

Specifically, the electrode was subjected to Ar ion milling at an acceleration voltage of 6 kV using an IM5000 manufactured by Hitachi Co., and then Ni, Co, Mn, and Al concentration ratios within the nodule, at the nodule interface, and on the surface of the oxide particle were measured at an acceleration voltage of 15kV using an IT8000-EDX manufactured by JEOL Co.

[Table 1]

| | Concentration ratio of Co in nodule to positive electrode active material [mol%] | Concentration ratio of Co at nodule interface to positive electrode active material [mol%] | Concentration ratio of Co on surface of lithium nickel-based oxide particle to positive electrode active material [mol%] | Concentration ratio of Al in nodule to positive electrode active material [mol%] | Concentration ratio of Al at nodule interface to positive electrode active material [mol%] | Concentration ratio of Al on surface of lithium nickel-based oxide particle to positive electrode active material [mol%] |
|---|---|---|---|---|---|---|
| | | | | | | |
| Example 1 | 1.0 | 20.0 | 34.5 | 1.0 | 0.9 | 0.8 |
| Comparative Example 1 | 1.0 | 3.9 | 38.1 | 0 | 0 | 0 |
| Comparative Example 2 | 1.0 | 20.2 | 35.6 | 0 | 0 | 0 |
| Comparative Example 3 | 1.0 | 20.0 | 35.1 | 0 | 0.12 | 0.19 |

**Experimental Example 2: Measurement of BET specific surface area of positive electrode active material**

For each of the positive electrode active materials of Example 1 and Comparative Examples 1 to 3, the BET specific surface area was calculated from a nitrogen gas adsorption amount at a liquid nitrogen temperature (77 K) using a specific surface area analyzer (BEL Japan Co., Ltd., BELSORP-mino II). The results are shown in Table 2 below.

[Table 2]

|  | BET specific surface area [$m^2$/g] |
|---|---|
| Example 1 | 0.6 |
| Comparative Example 1 | 0.6 |
| Comparative Example 2 | 0.6 |
| Comparative Example 3 | 0.6 |

**Experimental Example 3: High-temperature lifespan evaluation**

High-temperature lifespan properties were evaluated for lithium secondary battery half-cells manufactured as follows by respectively using the positive electrode active materials of Examples 1 and Comparative Examples 1 to 3.

**<Manufacturing of lithium secondary battery>**

The positive electrode active material prepared in each of Example 1 and Comparative Examples 1 to 3, a conductive material (carbon black), and a PVDF binder were mixed in a weight ratio of 95 : 2 : 3 in N-methylpyrrolidone to prepare a positive electrode slurry. The positive electrode slurry was applied on one surface of an aluminum current collector, dried at 130°C, and then roll-pressed to manufacture a positive electrode.

A lithium metal was used as a negative electrode, and a separator was interposed between the positive electrode manufactured by the method described above and the negative electrode to manufacture an electrode assembly, and the electrode assembly was placed inside a battery case, and then an electrolyte solution was injected into the case to manufacture a battery cell. The electrolyte solution was prepared by dissolving $LiPF_6$ with a 0.6 M concentration in a mixed organic solvent in which ethylene carbonate (EC): dimethyl carbonate (DMC): ethyl methyl carbonate (EMC) were mixed at a volume ratio of 1 : 2 : 1, and then adding 2 wt% of vinylene carbonate (VC) thereto.

Specifically, each of the lithium secondary battery half-cells was charged and discharged at 45 °C at 0.33 C in the voltage range of 2.5 V to 4.35 V, which was set to one cycle, and then subjected to 50 cycles of the charging and discharging to measure the capacity retention rate by using a cycler manufactured by PNE Co. The measurement results are shown in Table 3 below.

[Table 3]

|  | Capacity retention rate [300 cycle, %] |
|---|---|
| Example 1 | 95 |
| Comparative Example 1 | 88 |
| Comparative Example 2 | 90 |
| Comparative Example 3 | 93 |

From Table 3 above, it can be confirmed that the lithium secondary battery including the positive electrode active material of Example 1 has better high-temperature lifespan properties than the lithium secondary batteries respectively including the positive electrode active materials of Comparative Examples 1 to 3.

**Claims**

1.   A positive electrode active material comprising a lithium nickel-based oxide in the form of a single particle which is composed of one single nodule, or a pseudo-single particle which is a composite of 30 or fewer nodules, wherein the lithium nickel-based oxide includes cobalt (Co) and aluminum (Al), and concentration ratios of cobalt (Co) and aluminum (Al) on the surface of the lithium nickel-based oxide which are measured by Energy Dispersive X-ray Spectroscopy (EDX) respectively satisfy Equations 1 and 2 below:

(Concentration ratio of Co in nodule to positive electrode active material)≤(Concentration ratio of Co at nodule interface to positive electrode active material)≤ (Concentration ratio of Co on surface     [Equation 1] of lithium nickel-based oxide particle to positive electrode active material)

(Concentration ratio of Al on surface of lithium nickel-based oxide particle to positive electrode active material)≤ (Concentration ratio of Al at nodule interface to positive electrode active material)< (Concentration ratio of Al in nodule to positive electrode active material)     [Equation 2]

2. The positive electrode active material of claim 1, wherein in Equation 1 above, the concentration ratio of Co in the nodule with respect to the positive electrode active material is less than 5 mol%.

3. The positive electrode active material of claim 1, wherein in Equation 1 above, the concentration ratio of Al in the nodule with respect to the positive electrode active material is 0.2 mol% or greater.

4. The positive electrode active material of claim 1, wherein the positive electrode active material comprises a coating layer formed on the surface of the lithium nickel-based oxide, wherein the coating layer includes at least one selected from the group consisting of Co, Al, Mg, Ti, V, Cr, Mn, Zr, Nb, W, and B.

5. The positive electrode active material of claim 1, wherein the molar ratio of Ni among all transition metals except lithium in the lithium nickel-based oxide is 55 mol% or greater.

6. The positive electrode active material of claim 1, wherein the lithium nickel-based oxide has a composition represented by Formula 1 below:

$$[\text{Formula 1}] \qquad Li_aNi_bCo_cM^1_dM^2_eO_2$$

in Formula 1 above, $M^1$ is at least one selected from the group consisting of Mn and Al, $M^2$ is at least one selected from the group consisting of Ti, Mg, Zr, Y, Ba, Ca, Zr, Sr, W, Ta, Nb, and Mo, and $1.0 \leq a \leq 1.5$, $0.55 \leq b < 1.0$, $0 < c \leq 0.20$, $0 < d \leq 0.20$, and $0 \leq e \leq 0.10$.

7. The positive electrode active material of claim 1, wherein the average particle diameter of the nodules of the positive electrode active material is 1.0 $\mu$m to 10.0 $\mu$m.

8. The positive electrode active material of claim 1, wherein the positive electrode active material has a $D_{50}$ of 2.0 $\mu$m to 10.0 $\mu$m.

9. The positive electrode active material of claim 1, wherein the positive electrode active material has a BET specific surface area of 0.2 $m^2$/g to 1.5 $m^2$/g.

10. A method for manufacturing a positive electrode active material, the method comprising:

mixing a lithium nickel-based hydroxide precursor, a lithium raw material, and an aluminum-containing raw material, and then firing the mixture to form a lithium nickel-based oxide; and
mixing two types of cobalt compounds having different sizes and an aluminum compound with the lithium nickel-based oxide, and then heat-treating the mixture to form a coating layer.

11. The method of claim 10, wherein the firing is performed at a temperature of 600 °C to 1,000 °C for 4 hours to 12 hours.

12. The method of claim 10, wherein the cobalt compound is prepared by mixing two types of materials respectively having a $D_{50}$ of 50 nm to 800 nm and a $D_{50}$ of 200 nm to 2,000 nm in a ratio of 1:3 to 3:1.

13. The method of claim 10, wherein the heat treatment is performed at a temperature of 600 °C to 800 °C for 4 hours to 12 hours.

14. The method of claim 10, wherein the mixing of the cobalt compounds and the aluminum compound is performed by a dry mixing method.

15. A positive electrode comprising the positive electrode active material according to any one claim of claims 1 to 9.

16. A lithium secondary battery comprising the positive electrode of claim 15.

## INTERNATIONAL SEARCH REPORT

| International application No. |
| --- |
| **PCT/KR2025/003677** |

| A. | CLASSIFICATION OF SUBJECT MATTER |
| --- | --- |

**H01M 4/525**(2010.01)i; **H01M 4/36**(2006.01)i; **C01G 53/50**(2025.01)i; **H01M 4/131**(2010.01)i; **H01M 4/1391**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 4/485(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(positive electrode active material), 리튬 니켈계 산화물(lithium nickel oxide), 코발트(cobalt), 알루미늄(aluminum), 농도비(concentration ratio), 코팅층(coating layer)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2523095 B1 (SM LAB CO., LTD. et al.) 18 April 2023 (2023-04-18) See paragraphs [0029]-[0049], [0066], [0117]-[0119], [0135]-[0138] and [0149]-[0158]; claim 13; and table 1. | 1-9,15-16 |
| A | | 10-14 |
| Y | KR 10-2023-0094750 A (POSCO HOLDINGS INC. et al.) 28 June 2023 (2023-06-28) See paragraphs [0046]-[0048] and [0089]-[0091]. | 10-14 |
| Y | KR 10-2017-0142381 A (LG CHEM, LTD.) 28 December 2017 (2017-12-28) See paragraphs [0039]-[0045] and [0091]-[0092]; and claim 9. | 10-14 |
| A | KR 10-2021-0105440 A (CAMX POWER LLC) 26 August 2021 (2021-08-26) See entire document. | 1-16 |

| ✓ | Further documents are listed in the continuation of Box C. | ✓ | See patent family annex. |
| --- | --- | --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 June 2025** | **23 June 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/003677**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0102933 A (ALTECH CO., LTD.) 07 July 2023 (2023-07-07)<br>See entire document. | 1-16 |

Form PCT/ISA/210 (second sheet) (July 2022)

**INTERNATIONAL SEARCH REPORT**
Information on patent family members

| International application No. |
| --- |
| **PCT/KR2025/003677** |

| Patent document cited in search report | | | Publication date (day/month/year) | Patent family member(s) | | | Publication date (day/month/year) |
| --- | --- | --- | --- | --- | --- | --- | --- |
| KR | 10-2523095 | B1 | 18 April 2023 | WO | 2024-096295 | A1 | 10 May 2024 |
| KR | 10-2023-0094750 | A | 28 June 2023 | CN | 118402091 | A | 26 July 2024 |
| | | | | EP | 4456184 | A1 | 30 October 2024 |
| | | | | US | 2025-0087673 | A1 | 13 March 2025 |
| | | | | WO | 2023-121079 | A1 | 29 June 2023 |
| KR | 10-2017-0142381 | A | 28 December 2017 | | None | | |
| KR | 10-2021-0105440 | A | 26 August 2021 | CN | 113678285 | A | 19 November 2021 |
| | | | | EP | 3912209 | A1 | 24 November 2021 |
| | | | | JP | 2022-522999 | A | 21 April 2022 |
| | | | | JP | 7629403 | B2 | 13 February 2025 |
| | | | | KR | 10-2021-0105441 | A | 26 August 2021 |
| | | | | US | 10843936 | B2 | 24 November 2020 |
| | | | | US | 2020-0277199 | A1 | 03 September 2020 |
| | | | | WO | 2020-149910 | A1 | 23 July 2020 |
| KR | 10-2023-0102933 | A | 07 July 2023 | | None | | |

Form PCT/ISA/210 (patent family annex) (July 2022)

**EP 4 769 565 A1**

## REFERENCES CITED IN THE DESCRIPTION

**Patent documents cited in the description**

- KR 1020240039388